# EUROPEAN PATENT APPLICATION

(11) **EP 4 717 103 A2**
(43) Date of publication of application: **01.04.2026**
(21) Application number: 26157470.1
(22) Date of filing: 12.10.2022
(51) Int. Cl.: A24F 40/51

(54) **DEVICE FOR GENERATING AEROSOL**

(30) Priority: 21.10.2021 KR 20210141248
(62) Divisional of application: 22883860.3
(71) Applicant: KT&G Corporation, Daedeok-gu Daejeon 34337 (KR)
(72) Inventor: KIM, Taehun, 16925 Yongin-si Gyeonggi-do (KR)
(74) Representative: Schornack, Oliver

(57) **Abstract**

An aerosol-generating device is disclosed. The aerosol-generating device may comprises: a body comprising an insertion space; a sensor installed at the body and configured to detect an electro-magnetic characteristic of surroundings; an upper case detachably coupled to the body and comprising an insertion hole corresponding to an opening of the insertion space; and a ground board coupled to the upper case and extending along a circumference of the upper case and configured to electrically ground the sensor.

## Description

### Technical Field

The present disclosure relates to an aerosol-generating device.

### Background Art

An aerosol-generating device is a device that extracts certain components from a medium or a substance by forming an aerosol. The medium may contain a multicomponent substance. The substance contained in the medium may be a multicomponent flavoring substance. For example, the substance contained in the medium may include a nicotine component, an herbal component, and/or a coffee component. Recently, various research on aerosol-generating devices has been conducted.

### Disclosure

### Technical Problem

It is an object of the present disclosure to solve the above and other problems.

It is another object of the present disclosure to provide an aerosol-generating device in which the efficiency of the space in which the substrate is disposed is improved.

It is another object of the present disclosure to provide an aerosol-generating device that seals and protects a space in which a board is disposed.

It is another object of the present disclosure to provide an aerosol-generating device with improved airtightness and stability.

### Technical Solution

According to one aspect of the present disclosure for achieving the above object, the aerosol-generating device comprising: a body comprising an elongated insertion space; a cartridge coupled to the body to be adjacent to the insertion space; a partition wall formed at the body between the insertion space and the cartridge and configured to provide a first space therein; and a sensor installed at the body and electrically connected to a board disposed in the first space.

### Advantageous Effects

According to at least one of the embodiments of the present disclosure, it is possible to be provided the aerosol-generating device having improved efficiency of a space in which a board is disposed.

According to at least one of the embodiments of the present disclosure, it is possible to be provided the aerosol-generating device for sealing and protecting a space in which a board is disposed.

According to at least one of the embodiments of the present disclosure, it is possible to be provided the aerosol-generating device having improved airtightness and stability.

Additional applications of the present disclosure will become apparent from the following detailed description. However, because various changes and modifications will be clearly understood by those skilled in the art within the spirit and scope of the present disclosure, it should be understood that the detailed description and specific embodiments, such as preferred embodiments of the present disclosure, are merely given by way of example.

### Description of Drawings

The above and other objects, features, and other advantages of the present disclosure will be more clearly understood from the following detailed description taken in conjunction with the accompanying drawings, in which:

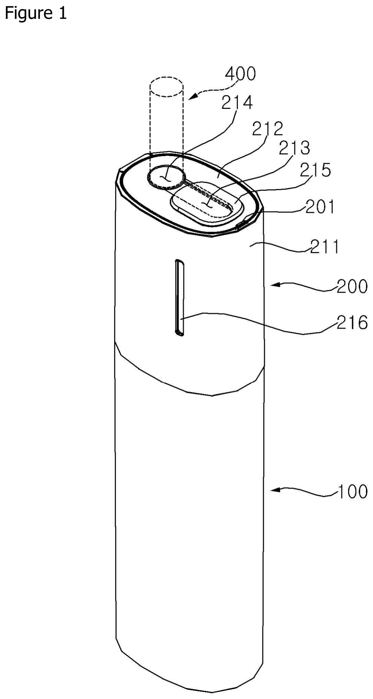

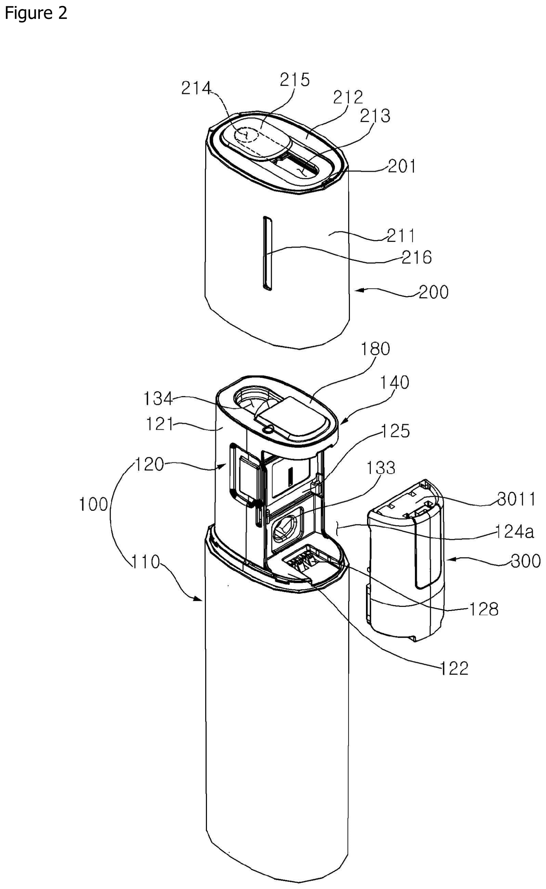

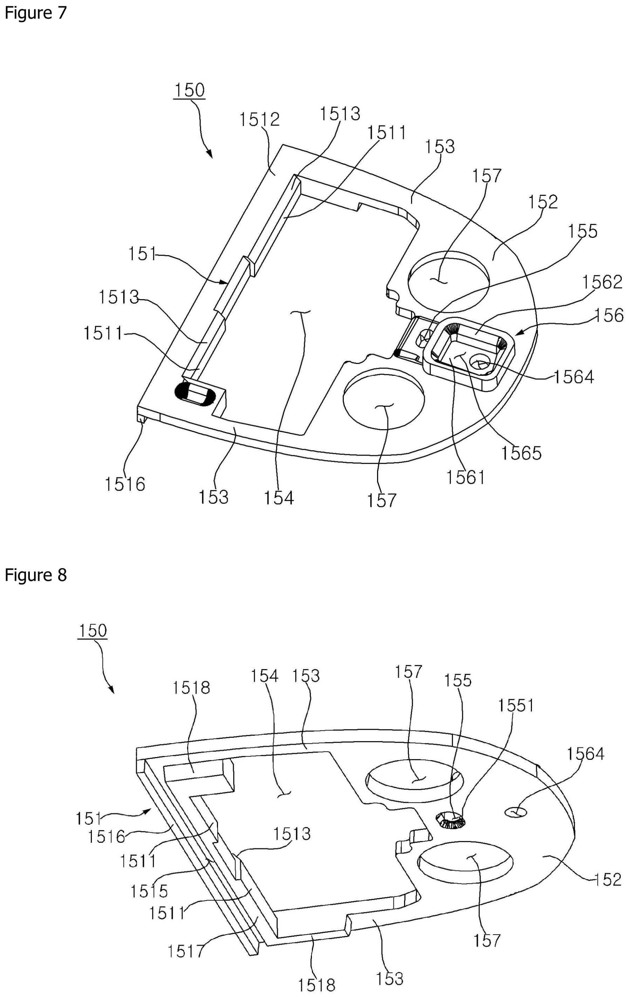

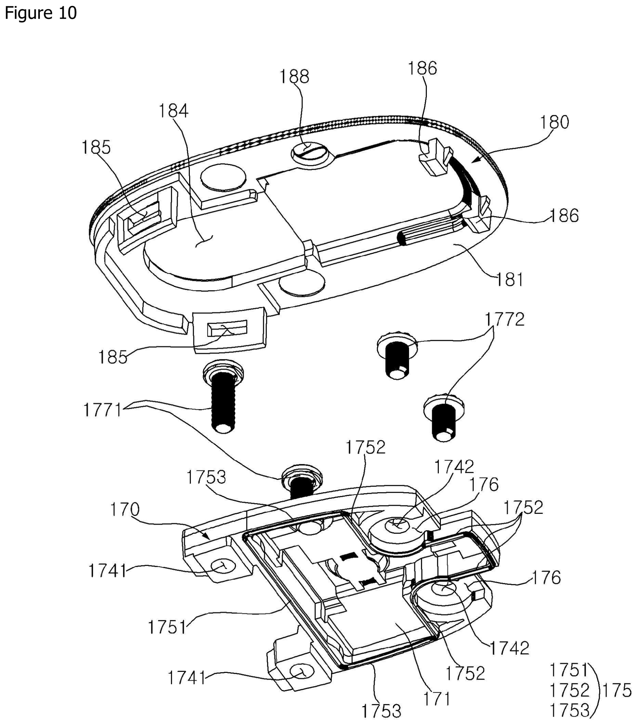

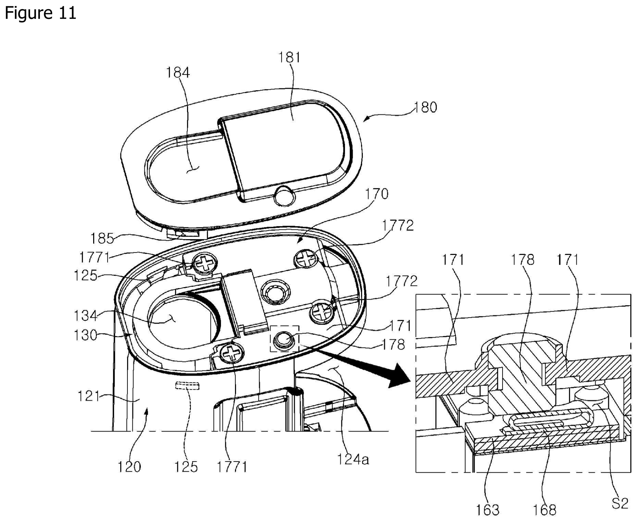

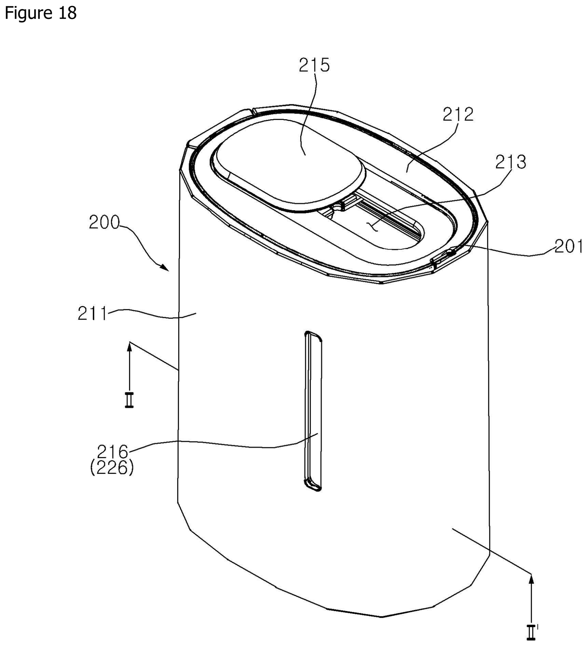

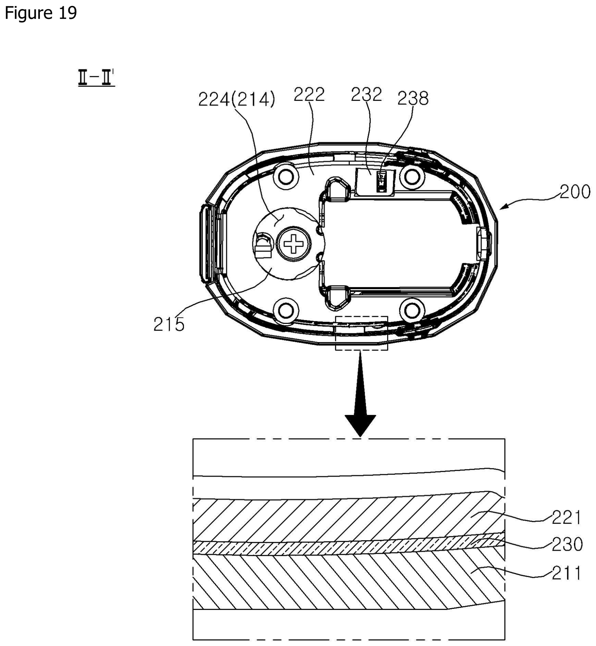

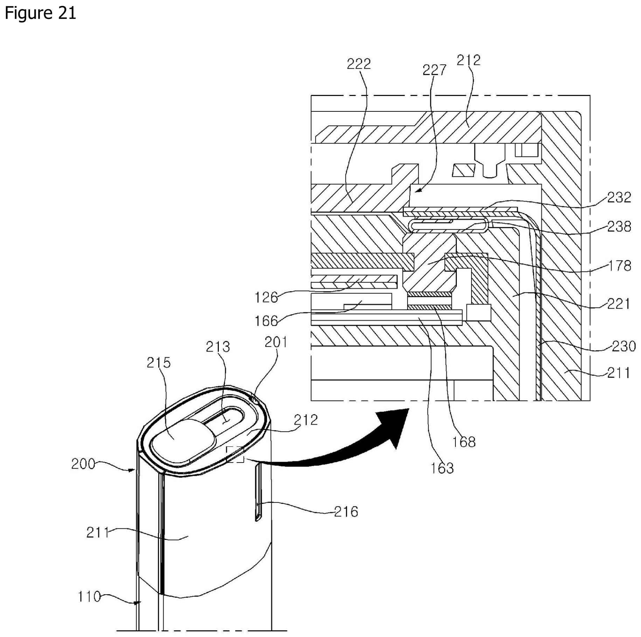

FIGS. 1 to 22 are views showing examples of an aerosol-generating device according to embodiments of the present disclosure.

### Mode for Invention

Hereinafter, the embodiments disclosed in the present specification will be described in detail with reference to the accompanying drawings, and the same or similar elements are denoted by the same reference numerals even though they are depicted in different drawings, and redundant descriptions thereof will be omitted.

In the following description, with respect to constituent elements used in the following description, the suffixes "module" and "unit" are used only in consideration of facilitation of description, and do not have mutually distinguished meanings or functions.

In addition, in the following description of the embodiments disclosed in the present specification, a detailed description of known functions and configurations incorporated herein will be omitted when the same may make the subject matter of the embodiments disclosed in the present specification rather unclear. In addition, the accompanying drawings are provided only for a better understanding of the embodiments disclosed in the present specification and are not intended to limit the technical ideas disclosed in the present specification. Therefore, it should be understood that the accompanying drawings include all modifications, equivalents, and substitutions within the scope and sprit of the present disclosure.

It will be understood that although the terms "first", "second", etc., may be used herein to describe various components, these components should not be limited by these terms. These terms are only used to distinguish one component from another component.

It will be understood that when a component is referred to as being "connected to" or "coupled to" another component, it may be directly connected to or coupled to another component, or intervening components may be present. On the other hand, when a component is referred to as being "directly connected to" or "directly coupled to" another component, there are no intervening components present.

As used herein, the singular form is intended to include the plural forms as well, unless the context clearly indicates otherwise.

Referring to FIG. 1 and FIG. 2, the body 100 may include a lower body 110 and an upper body 120. The upper body 120 may be located above the lower body 110. The lower body 110 may extend vertically. The body 100 may accommodate components for driving the device therein. The upper body 120 may provide an insertion space 134 opened upward. The insertion space 134 may be located inside the upper body 120. The insertion space 134 may extend vertically. The insertion space 134 may be formed in the pipe 130 (see FIG. 3) located inside the upper body 120.

The upper case 200 may have a hollow shape with an open lower portion. The upper body 120 may be inserted into the hollow of the upper case 200. The upper case 200 may be detachably coupled to the body 100. The upper case 200 may cover the upper body 120. The lateral part 211 of the upper case 200 may cover the outer wall 121 of the upper body 120. The upper part 212 of the upper case 200 may cover the upper part 180 or the outer cover 180 of the upper body 120. When the upper case 200 is coupled to the body 100, the upper case 200 may cover the body 100 and the cartridge 300 together. The cartridge 300 may be disposed inside the upper case 200.

The insertion hole 214 may be formed at the upper part 212 of the upper case 200. The insertion hole 214 may correspond to the opening of the insertion space 134. The cap 215 may be movably installed on the upper part 212 of the upper case 200. The slide hole 213 may be extended from the insertion hole 214 to one side, in the upper part 212 of the upper case 200. The cap 215 may move along the slide hole 213. The cap 215 may open and close the insertion hole 214 and the insertion space 134. The stick 400 may be inserted into the insertion space 134 through the insertion hole 214. For example, the stick 400 may be a cigarette.

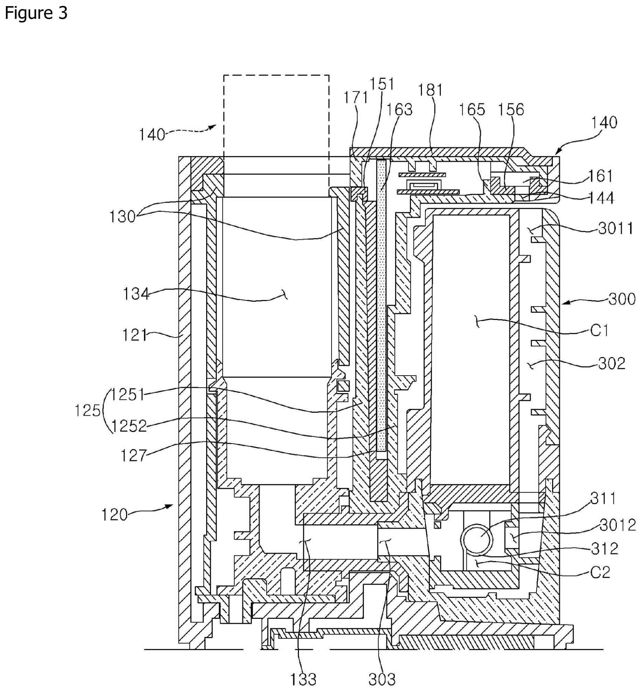

The outer wall 121 and the partition wall 125 may form a lateral portion of the upper body 120. The partition wall 125 may separate the cartridge coupling space 124a and the insertion space 134 (see FIG. 3). The seating part 122 may extend from a lower portion of the partition wall 125 to one side. The extension part 140 may extend from an upper portion of the partition wall 125 to one side.

The cartridge coupling space 124a may be formed at one side of the upper body 120. The cartridge coupling space 124a may be defined by the seating part 122 and the partition wall 125 and the extension part 140 of the upper body 120. The lower portion of the cartridge coupling space 124a may be covered by the seating part 122. One lateral portion of the cartridge coupling space 124a may be covered by the partition wall 125 of the upper body 120. The upper portion of the cartridge coupling space 124a may be covered by the extension part 140. The cartridge coupling space 124a may be opened outwardly between the seating part 122 and the extension part 140.

The cartridge 300 may be coupled to one side of the upper body 120. The cartridge 300 may be inserted into the cartridge coupling space 124a. The bottom of the cartridge 300 may be seated on the seating part 122. One lateral portion of the cartridge 300 may face the partition wall 125 of the upper body 120. The other lateral portion of the cartridge 300 may be exposed to the outside of the upper body 120. The upper portion of the cartridge 300 may be covered by the extension part 140.

The cartridge 300 may store a liquid therein. The cartridge 300 may be electrically connected to the body 100 through the cartridge terminal 128 exposed from the seating part 122. The cartridge 300 may receive power to generate an aerosol therein.

Referring to FIG. 1 to FIG. 3, the cartridge 300 may include a first chamber C1. The first chamber C1 may store a liquid. The cartridge 300 may include a second chamber C2. The second chamber C2 may be separated from the first chamber C1. The second chamber C2 may be disposed below the first chamber C1.

The wick 311 may be disposed in the second chamber C2. The wick 311 may be connected to the first chamber C1. The wick 311 may receive a liquid from the first chamber C1. The heater 312 may be disposed in the second chamber C2. The heater 312 may wind the wick 311. The heater 312 may be electrically connected to the cartridge terminal 128 to receive power. The heater 312 may heat the wick 311. When the heater 312 heats the wick 311 supplied with the liquid, an aerosol may be generated in the second chamber C2.

The cartridge 300 may have a first inlet 3011. The first inlet 3011 may be formed at the upper end of the cartridge 300. The first inlet 3011 may communicate with the outside of the cartridge 300. cartridge 300 may have a second inlet 3012. The second inlet 3012 may be formed at one side of the second chamber C2 and may communicate with the second chamber C2. The inflow passage 302 may connect the first inlet 3011 and the second inlet 3012. The inflow passage 302 may be positioned between the first inlet 3011 and the second inlet 3012. The inflow passage 302 may extend long in the vertical direction inside the cartridge 300. The cartridge 300 may have an outlet 303. The outlet 303 may be formed at the second chamber C2 to communicate with the outside of the cartridge 300. The outlet 303 may be opposite to the second inlet 3012 with respect to the second chamber C2. When the cartridge 300 is coupled to the upper body 120, the outlet 303 may be connected to the connection passage 133.

The user may put the stick 400 inserted into the insertion space 134 into the mouth and inhale the air. In a state in which the upper case 200 is coupled to the body 100, air may be introduced into the first inlet 3011 through the opening 201 formed in the upper case 200. Air may be introduced into the interior of the cartridge 300 from the outside of the cartridge 300 through the first inlet 3011. The air introduced into the first inlet 3011 may sequentially pass through the inflow passage 302 and the second inlet 3012 to be introduced into the second chamber C2. The air introduced into the second chamber C2 may be discharged to the outside of the cartridge 300 through the outlet 303 accompanying the aerosol generated in the vicinity of the wick 311. The air discharged through the outlet 303 may be supplied to the insertion space 134 and the stick 400 inserted into the insertion space 134 through the connection passage 133.

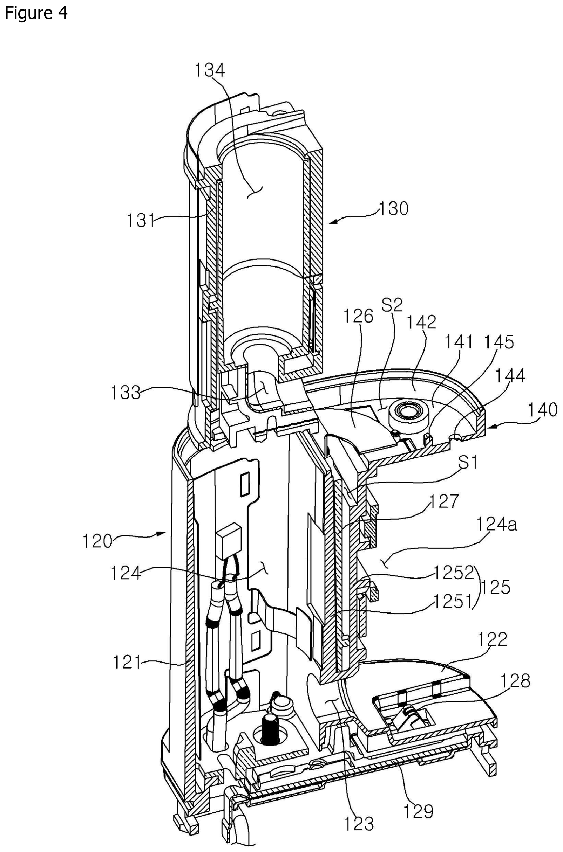

Referring to FIG. 3 and FIG. 4, the upper body 120 may include an outer wall 121 and a partition wall 125. The outer wall 121 and the partition wall 125 may be connected to each other. The pipe installation space 124 may be surrounded by an outer wall 121 and a partition wall 125. The pipe installation space 124 may be opened upward. The pipe installation space 124 may extend vertically.

The partition wall 125 may be extended vertically between the pipe 130 and the cartridge coupling space 124a. The partition wall 125 may separate the pipe installation space 124 and the cartridge coupling space 124a. One surface of the partition wall 125 may face the pipe installation space 124, and the other surface of the partition wall 125 may face the cartridge coupling space 124a. a connecting hole 123 may be formed by opening the lower portion of the partition wall 125. The connecting hole 123 may communicate with the pipe installation space 124. The partition wall 125 may be formed between the insertion space 134 and the cartridge coupling space 124a.

The pipe 130 may be elongated in the vertical direction. The pipe 130 may be hollow. The insertion space 134 may be formed inside the pipe 130. The insertion space 134 may be opened upward. The insertion space 134 may extend vertically. The connection passage 133 may be formed in the pipe 130. The connection passage 133 may be formed below the insertion space 134. One end of the connection passage 133 may communicate with the outside of the pipe 130, and the other end may communicate with the insertion space 134. The connection passage 133 may be bent to one side from the lower portion of the insertion space 134.

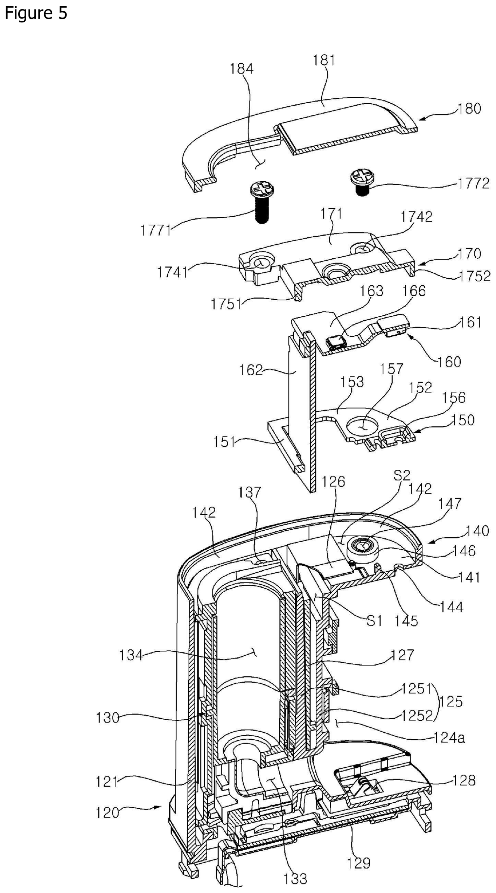

Referring to FIG. 4 and FIG. 5, the pipe 130 may be inserted into the pipe installation space 124. The pipe 130 may be surrounded by an outer wall 121 and a partition wall 125. The connection passage 133 may communicate with the connecting hole 123.

The partition wall 125 may include a first partition wall part 1251 and a second partition wall part 1252. The first partition wall part 1251 and the second partition wall part 1252 may be formed in parallel with each other. The first partition wall part 1251 may extend vertically. The second partition wall part 1252 may extend vertically. The first partition wall part 1251 may face one side of the pipe installation space 124 or the pipe 130. The second partition wall part 1252 may face the cartridge coupling space 124a.

The partition wall 125 may provide a first space S1 therein. The first space S1 may be formed between the first partition wall part 1251 and the second partition wall part 1252. The first space S1 may extend vertically. The first space S1 may be opened upward. One side and the other side of the first space S1 may be covered by the first partition wall part 1251 and the second partition wall part 1252, respectively. The first partition wall part 1251 may separate the pipe installation space 124 from the first space S1. The second partition wall part 1252 may separate the cartridge coupling space 124a and the second space S2.

The bracket 127 may be located or fixed in the first space S1. The bracket 127 may extend long in vertical direction. The bracket 127 may support or fix the second board 162 inserted into the first space S1.

One side of the connector 126 may be disposed in the first space S1, and the other side of the connector 126 may be disposed in the second space S2. The connector 126 may be bent and extended from the first space S1 to the second space S2. One end of the first connector 126 may be connected to the first board 129 installed under the upper body 120. The first board 129 may be directly or indirectly connected to a power source, a memory, a control unit, a sensor, etc. disposed inside the body 100, or a memory, a control unit, a sensor, etc. may be mounted on the first board 129. The first connector 126 may have conductivity.

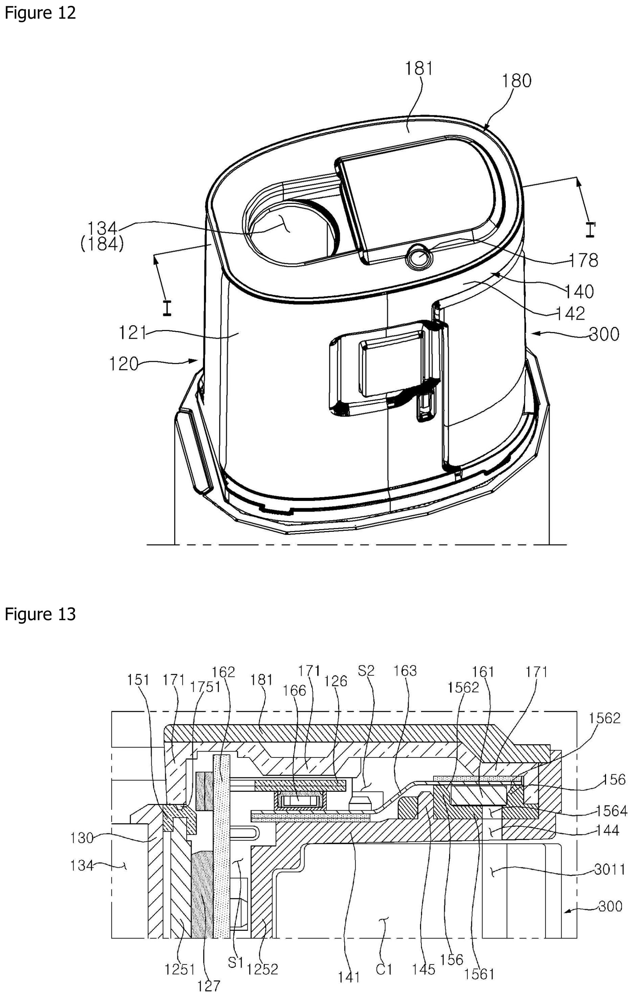

The upper body 120 may include an extension part 140. The extension part 140 may extend from the upper end of the second partition wall part 1252 to one side. The extension part 140 may extend in a direction opposite to the pipe installation space 124 or the pipe 130 with respect to the partition wall part 125. The extension part 140 may extend in a direction crossing the longitudinal direction of the second partition wall part 1252. The extension part 140 may cover the upper side of the cartridge coupling space 124a or the upper side of the cartridge 300. The second space S2 may be formed inside the extension part 140. The second space S2 may be defined as a space formed between the extension part 140 and the inner cover 170 (see FIG. 13). The second space S2 and the first space S1 may be connected.

The extension part 140 may include an extension plate 141. The extension plate 141 may extend from the second partition wall part 1252 to one side. The extension plate 141 may have a thin plate shape. The extension plate 141 may cover a lower portion of the second space S2.

The extension part 140 may include a rim part 142. The rim part 142 may extend in the circumferential direction along the upper portion of the outer wall 121 of the upper body 120 and the edge of the extension plate 141. The rim part 142 may include a portion protruding upward from the edge of the extension plate 141. The rim part 142 may cover the circumference of the second space S2.

The sealing member 150 may be disposed above the extension plate 141. The sealing member 150 may be disposed in the second space S2. One side of the sealing member 150 may cover the upper end of the first partition wall part 1251. The other side of the sealing member 150 may cover at least a portion of the extension plate 141. The sealing member 150 may include a board insertion hole 154 and a column insertion hole 157. The board insertion hole 154 and the opening of the first space S1 may communicate with each other. The sealing member 150 may have elasticity. For example, the sealing member 150 may be made of a rubber or silicone material.

The sensor assembly 160 may be disposed in the first space S1 and the second space S2. One side of the sensor assembly 160 may be inserted into the first space S1 through the first board insertion hole 154. The other side of the sensor assembly 160 may be disposed in the second space S2.

The cover 170, 180 may cover the first space S1. The cover 170, 180 may cover the second space S2. The sealing member 150 may be in close contact between the cover 170, 180 and the partition wall 125 to seal one side of the first space S1 and the second space S1 from the insertion space 134. The sealing member 150 may be in close contact between the cover 170, 180 and the extension part 140 to seal the other side of the second space S2.

The cover 170, 180 may include an inner cover 170. The inner cover 170 may be disposed above the sealing member 150. The inner cover 170 may cover the upper portion of the sealing member 150 and the upper portion of the sensor assembly 160. The inner cover 170 may be coupled to or fixed to the extension part 140 and the pipe 130 through screws 1771, 1772. The inner cover 170 may press the sealing member 150 downward through screws 1771, 1772. The inner cover 170 may cover the upper portion of the second space S2 (see FIG. 13). The inner cover 170 may cover the circumference of the second space S2 together with the rim part 142.

The cover 170, 180 may include an outer cover 180. The outer cover 180 may be disposed above the inner cover 170. The outer cover 180 may cover the upper portion of the inner cover 170 and the upper portion of the pipe 130. The outer cover 180 may include a cover hole 184. The cover hole 184 may correspond to the opening of the insertion space 134. The outer cover 180 may be assembled or coupled to the upper body 120 and the extension 140.

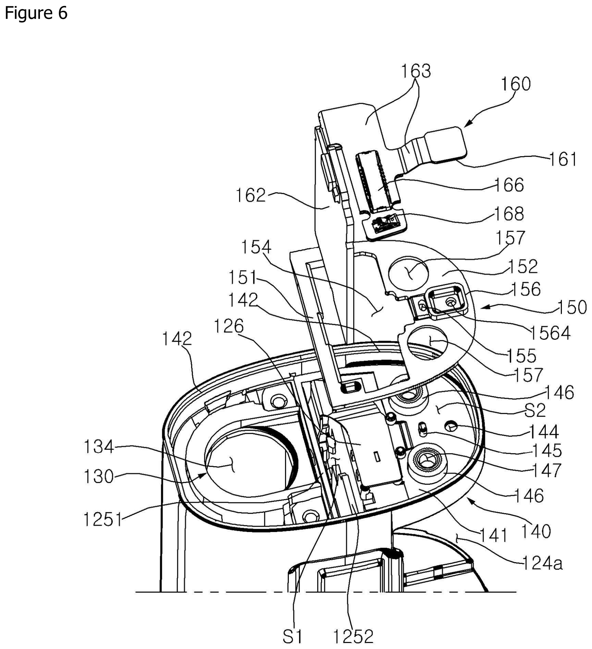

Referring to FIG. 6, the sensor assembly 160 may include a first sensor 161. The sensor assembly 160 may include a second board 162. The sensor assembly 160 may include a third board 163. The sensor assembly 160 may include a second connector 166. The sensor assembly 160 may include a first terminal 168.

The first sensor 161 may detect a flow of air. The first sensor 161 may detect that air flows around the first inlet 3011 (refer to FIG. 3) of the cartridge 300. The first sensor 161 may be an air flow rate sensor 161.

The second board 162 may be a Rigid Printed Circuit Board (RPCB), and the third board 163 may be a Flexible Printed Circuit Board (FPCB). The second board 162 and the third board 163 may be connected to form a Rigid Flexible Printed Circuit Board (RFPCB). The second board 162 may have a plate shape extending in the vertical direction. The third board 163 may be connected to an upper end of the second board 162. The third board 163 may be bent from the second board 162 toward the second space S2. One end of the third board 163 may be connected to the first sensor 161. The other end of the third board 163 may be connected to the second board 162.

An electrode pattern for sensing various information may be formed on the second board 162. The second board 162 may be referred to as a second sensor 162. The second sensor 162 may detect a change in an electromagnetic characteristic around it. The second sensor 162 may sense various information according to a change in permittivity.

For example, the second sensor 162 may sense information about whether the stick 400 is inserted into the insertion space 134, information about the humidity of the stick 400, information about the type of the stick 400, information on whether the stick 400 is a product-only stick, or a genuine stick, information on whether the cartridge 300 is mounted on the body 100, information on the type of the mounted cartridge 300, information on the remaining amount of the liquid stored in the cartridge 300, etc. The second sensor 162 may be a capacitance sensor 162.

The second connector 166 may be mounted on the third board 163. The second connector 166 may have conductivity. The second connector 166 may be electrically connected to the first connector 126. Accordingly, electrical signals may be exchanged between the first board 129 (refer to FIG. 5), the second board 162, the third board 163, and the first sensor 161.

The first terminal 168 may be mounted on the third board 163. The first terminal 168 may be a clip type or a pogo pin type conductive terminal. The first terminal 168 may face upward.

Referring to FIG. 6 to FIG. 8, the first sensing hole 144 may be formed by opening the extension plate 141. The first sensing hole 144 may be opened toward the cartridge coupling space 124a. The sealing coupling protrusion 145 may protrude upward from the extension plate 141. The sealing coupling protrusion 145 may have a protrusion shape. The sealing coupling protrusion 145 may have a non-circular cross-section. The sealing coupling protrusion 145 may be located around the first sensing hole 144.

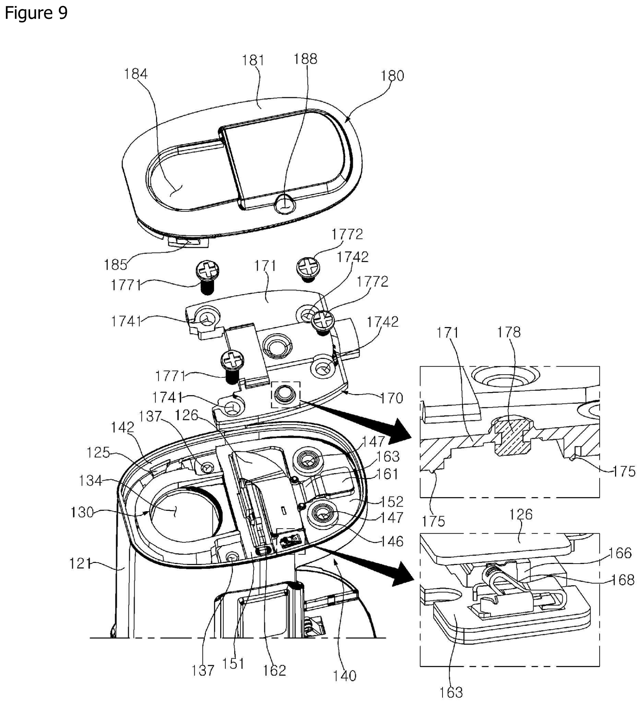

A column 146 may protrude upward from the extension plate 141. The column 146 may have a cylindrical shape. The column 146 may have a screw fastening hole 147 to which screws 1771 and 1772 (refer to FIG. 9) can be coupled therein. The column 146 may be any one of the plurality of columns 146. The plurality of columns 146 may be arranged to be symmetrical to each other.

The sealing member 150 may be coupled to the extension part 140. The sealing member 150 may cover the extension plate 141. The edge of the sealing member 150 may be in close contact with the rim part 142. The periphery of the sensor assembly 160 may be sealed by the sealing member 150.

The sealing member 150 may include a first sealing part 151 and a second sealing part 152. The first sealing part 151 may have a bar shape elongated in one direction. The second sealing part 152 may have a plate shape. The first sealing part 151 and the second sealing part 152 may be spaced apart from each other.

The third sealing part 153 may be positioned between the first sealing part 151 and the second sealing part 152. One end of the third sealing part 153 may be connected to the first sealing part 151 and the other end of the third sealing part 153 may be connected to the second sealing part 152. The third sealing part 153 may connect the first sealing part 151 and the second sealing part 152. The third sealing part 153 may extend in a direction crossing the longitudinal direction of the first sealing part 151. The third sealing part 153 may extend from the first sealing part 151 toward the second sealing part 152. The third sealing part 153 may have a bar shape. The third sealing part 153 may be provided as a pair. Any one of the pair of third sealing parts 153 may be connected to one end of the first sealing part 151 and one side of the second sealing part 152, and the other of the pair of third sealing parts 153 may be connected to the other end of the first sealing part 151 and the other side of the second sealing part 152.

The board insertion hole 154 may be formed by opening the sealing member 150. The board insertion hole 154 may be defined as a space formed between the first sealing part 151, the second sealing part 152, and the pair of third sealing parts 153. The board insertion hole 154 may be opened up and down.

The sealing coupling hole 155 may be formed by opening the second sealing part 152. The sealing coupling hole 155 may correspond to the sealing coupling protrusion 145. The sealing coupling hole 155 may have a non-circular cross-section. The protrusion guide surface 1551 may be formed around the lower portion of the sealing coupling hole 155. The protrusion guide surface 1551 may be formed to be inclined upwardly from the lower surface of the second sealing part 152 toward the insertion hole 155. The protrusion guide surface 1551 may extend along the circumference of the insertion hole 155. Accordingly, the sealing coupling protrusion 145 may be guided to the sealing coupling hole 155 by the protrusion guide surface 1551 and inserted into the sealing coupling hole 155 to be fitted.

The sensor accommodating part 156 may be formed in the second sealing part 152 around the sealing coupling hole 155. The sensor accommodating part 156 may have a shape protruding upward from the second sealing part 152. The sensor accommodating part 156 may form an accommodating groove 1565 on the inside. The accommodating groove 1565 may be opened upward. The lower portion of the accommodating groove 1565 is covered by the accommodating part bottom 1561, and may communicate with the second sensing hole 1564 formed by opening the accommodating part bottom 1561. The second sensing hole 1564 may correspond to the first sensing hole 144. The lateral side of the accommodating groove 1565 may be covered by the accommodating part lateral wall 1562. The accommodating part lateral wall 1562 may extend along the circumference of the accommodating groove 1565. The accommodating part lateral wall 1562 may be formed to be inclined so that the sensing groove 1565 is gradually narrowed from the upper side to the lower side.

The column insertion hole 157 may be formed by opening the second sealing part 152. The column insertion hole 157 may correspond to the column 146. The column insertion hole 157 may have a circular shape. A plurality of column insertion holes 157 may be provided. The column 146 may be inserted into the column insertion hole 157 to be fitted.

The inner surface 1511 of the first sealing part 151 may be a surface facing the board insertion hole 154. The inner surface 1511 may face a direction crossing the upper surface 1512 of the first sealing part 151. The inner surface 1511 may be closer to the board insertion hole 154 than the upper surface 1512.

The first sealing part 151 may include a board guide surface 1513. The board guide surface 1513 may be formed between the inner surface 1511 and the upper surface 1512. The board guide surface 1513 may extend along the longitudinal direction of the first sealing part 151. The board guide surface 1513 may be declined downward from the upper surface 1512 toward the inner surface 1511. The board guide surface 1513 may face the board insertion hole 154. The board guide surface 1513 may be declined downward so that the board insertion hole 154 becomes narrower toward the lower side. Accordingly, even when the second board 162 is in contact with the first sealing part 151, the second board 162 may be guided to pass through the board insertion hole 154 by the board guide surface 1513.

The fitting groove 1515 may be formed on the lower surface of the first sealing part 151. The fitting groove 1515 may be opened downward. The fitting groove 1515 may extend long in the longitudinal direction of the first sealing part 151. The fitting groove 1515 may correspond to the first partition wall part 1251. The first partition wall part 1251 may be inserted into the fitting groove 1515 to be fitted.

Referring to FIG. 6 to FIG. 9, the sealing member 150 may be assembled or coupled to the extension part 140. When the sealing member 150 is assembled to the extension part 140, the first sealing part 151 may be in close contact with the upper end of the first partition wall part 1251. The second sealing part 152 may be in close contact with the extension plate 141. The circumference of the sealing member 150 may be in close contact with the inner circumferential surface of the rim part 142.

The sealing coupling protrusion 145 may be inserted into the sealing coupling hole 155 to be fitted. The second sensing hole 1564 may be positioned to correspond to the first sensing hole 144 and communicate with each other. The column 146 may be inserted into the column insertion hole 157 to be fitted. The screw fastening hole 147 formed inside the column 146 may pass through the column insertion hole 157 and open upward. The board insertion hole 154 may be positioned above the first space S1 to communicate with the first space S1.

Accordingly, the sealing member 150 may be coupled to the extension part 140 to be stably fixed.

The first sensor 161 may be accommodated in the accommodating groove 1565 to be in close contact with the sensor accommodating part 156. The first sensor 161 may face downward in the sensor accommodating part 156. The first sensor 161 may be connected to the outside through the first sensing hole 144 and the second sensing hole 1564. The second board 162 (or the second sensor 162) may be inserted into the first space S1 through the board insertion hole 154.

The first connector 126 may be exposed from the first space S1 to the extension part 140. The first connector 126 may be exposed upwardly through the board insertion hole 154 of the sealing member 150 coupled to the extension part 140. The second connector 166 mounted on the third board 163 may be in contact with the first connector 126 exposed from the board insertion hole 154 to be electrically connected. The sensor assembly 160 may be fixed with respect to the extension part 140. The sensor assembly 160 may be disposed inside the circumference of the sealing member 150.

Referring to FIG. 9 to FIG. 11, the first screw fastening hole 137 may be formed by opening the upper portion of the pipe 130 upward. A thread may be formed on the inner circumferential surface of the first screw fastening hole 137. The first screw fastening hole 137 may be formed in plurality. The second screw fastening hole 147 may be formed inside the column 146. A thread may be formed on the inner circumferential surface of the second screw fastening hole 147. The second screw fastening hole 147 may be formed in plurality.

The inner cover 170 may include an inner plate 171. The inner plate 171 may cover the sealing member 150 and the sensor assembly 160. The inner plate 171 may cover at least a portion of an upper portion of the pipe 130. The inner plate 171 may support the sealing member 150, the sensor assembly 160, and the pipe 130, and may prevent separation of them.

The screw through holes 1741, 1742 may be formed by opening the inner plate 171. The screws 1771, 1772 may pass through the screw through holes 1741, 1742 to be fastened to the screw fastening holes 137, 147, and couple the inner plate 171 and the upper body 120 to each other. The screws 1771, 1772 may be screwed into the screw fastening holes 137, 147 to press the inner plate 171 downward. The inner plate 171 may be disposed inside the rim part 142.

The first screw through hole 1741 may be formed on one side of the inner plate 171. The first screw through hole 1741 may be formed in plurality. Each of the plurality of first screw through holes 1741 may be formed at a position corresponding to each of the plurality of first screw fastening holes 137. The first screw 1771 may pass through the first screw through hole 1471 to be screwed into the first screw fastening hole 137.

The second screw through hole 1742 may be formed on the other side of the inner plate 171. The second screw through hole 1742 may be formed in plurality. Each of the plurality of second screw through holes 1742 may be formed at a position corresponding to each of the plurality of second screw fastening holes 147. The second screw 1772 may pass through the second screw through hole 1472 to be screwed into the second screw fastening hole 147.

The pressing protrusion 175 may protrude downward from the lower surface of the inner plate 171. The pressing protrusion 175 may extend along the edge of the sealing member 150 and the periphery of the sensor accommodating part 156. The pressing protrusion 175 may press the sealing member 150.

The pressing protrusion 175 may include a first pressing part 1751. The first pressing part 1751 may be formed at a position corresponding to the first sealing part 151. The first pressing part 1751 may extend long along the first sealing part 151. The width of the first pressing part 1751 may be thinner than the width of the upper surface of the first sealing part 151. The first pressing part 1571 may press the upper surface of the first sealing part 151 downward.

The pressing protrusion 175 may include a second pressing part 1752. The second pressing part 1752 may extend along the periphery of the sensor accommodating part 156 formed in the second sealing part 152. The second pressing part 1752 may press the upper surface of the second sealing part 152 formed around the sensor accommodating part 156 downward.

The pressing protrusion 175 may include a third pressing part 1753. The third pressing part 1753 may connect the first pressing part 1751 and the second pressing part 1752. Each of the pair of third pressing parts 1753 may be formed at a position corresponding to each of the pair of third sealing parts 153. The third pressing part 1753 may extend long along the third sealing part 153. The width of the third pressing part 1753 may be thinner than the width of the upper surface of the third sealing part 153. The third pressing part 1753 may press the upper surface of the third sealing part 153 downward.

Accordingly, the inner plate 171 may be in close contact with the sealing member 150 by pressing the sealing member 150 downward. In addition, the first and second spaces S1, S2 are sealed, and foreign substances such as liquid are prevented from flowing into the first and second spaces S1 and S2, and the connector 126 and the sensor assembly 160 may be protected from foreign substances.

In addition, since one side of the inner cover 170 is coupled to the extension part 140 and the other side of the inner cover 170 is coupled to the pipe 130, the pipe 130 may be stably fixed while the upper portion of the pipe 130 inserted into the upper body 120 is supported. In addition, the sealing member 150 can be stably fixed.

Referring to FIG. 9 to FIG. 12, the outer cover 180 may be disposed above the upper body 120 and the extension part 140. The outer cover 180 may be coupled to the upper body 120 and/or the extension part 140. The outer cover 180 may be disposed inside the rim part 142. The outer cover 180 may cover or block gaps between the components on the inside of the rim part 142.

The outer cover 180 may include an outer plate 181. The outer plate 181 may be disposed inside the rim part 142 to cover the inner cover 170 and the pipe 130. The circumference of the outer plate 181 may be in contact with or in close contact with the inner circumferential surface of the rim part 142. The cover hole 184 may be formed by opening one side of the outer plate 181 up and down. The cover hole 184 may correspond to the opening of the insertion space 134.

The cover coupling groove 185 may be formed on the lower side of the outer plate 181. A plurality of cover coupling grooves 185 may be provided. The cover coupling groove 185 may be located adjacent to the edge of the outer plate 181. The cover coupling groove 185 may be opened in a lateral direction crossing the vertical direction.

The hook 186 may protrude downward from the outer plate 181. A plurality of hooks 186 may be provided. The hook 186 may be positioned adjacent to the edge of the outer plate 181.

The cover coupling protrusion 125 may protrude inward from the inner circumferential surface of the rim portion 142 in the upper circumference of the pipe 130. The cover coupling protrusion 125 may be formed in plurality. The cover coupling protrusion 125 may correspond to the cover coupling groove 185. Accordingly, the cover coupling protrusion 125 may be inserted into the cover coupling groove 185 to couple one side of the outer cover 180 and the upper body 120 to each other.

The hook engaging groove 176 may be formed on one side of the inner plate 171. The hook engaging groove 176 may be opened in the lateral direction. The hook 186 may be inserted into the hook engaging groove 176 to be engaged with the inner plate 171. Accordingly, the other side of the outer cover 180 and the inner cover 170 may be coupled to each other, and the other side of the outer cover 180 may be fixed to the extension part 140 side.

The upper body 120 may block a gap between the pipe 130 and the outer wall 121 or the pipe 130 and the rim part 142. The upper body 120 may block a gap between the pipe 130 and the partition wall 125. The upper body 120 may block a gap between the pipe 130 and the inner plate 171. The upper body 120 may block a gap between the inner plate 171 and the rim part 142. The upper body 120 may block a gap between the sealing member 150 and the rim part 142.

Accordingly, it is possible to form the upper exterior of the upper body 120 and the extension part 140, and prevent foreign substances from entering the gap between the components from the outside.

The second terminal 178 may be coupled to the inner plate 171. The inner plate 171 may be formed by injection into the second terminal 178. An upper end of the second terminal 178 may be exposed by protruding upwardly of the inner plate 171. A lower end of the second terminal 178 may be exposed by protruding downward from the inner plate 171. The second terminal 178 may have conductivity. A lower portion of the second terminal 178 may be electrically connected to the first terminal 168 coupled to the second connector 166.

The first terminal hole 188 may be formed by opening one side of the outer plate 181. The first terminal hole 188 may correspond to the second terminal 178. The upper end of the second terminal 178 may be exposed to the upper side of the outer cover 180 through the first terminal hole 188.

Referring to FIG. 3 and FIG. 13, the sensor assembly 160 may be disposed in a space separated from the pipe 130 and the cartridge 300. The sensor assembly 160 may be disposed in the first space S1 and the second space S2. The second board 162 (or the second sensor 162) may be disposed in the first space S1. The first sensor 161 may be disposed in the second space S2. The third board 163 may be disposed in the second space S2. The first connector 126 may be exposed from the first space S1 to the second space S2 (refer to FIG. 6). The second connector 166 may be disposed in the second space S2. The second connector 166 may be connected to the first connector 126 in the second space S2.

The first sealing part 151 may be disposed between the first partition wall part 1251 and the inner plate 171. The first sealing part 151 may be in close contact with the upper end of the first partition wall part 1251. The first sealing part 151 may be in close contact with the lower end of the inner plate 171.

The sensor accommodating part 156 of the second sealing part 152 may seal the periphery of the first sensing hole 144. The sensor accommodating part 156 may be in close contact with the extension plate 141 around the first sensing hole 144. The second sensing hole 1564 formed in the sensor accommodating part 156 may communicate with the first sensing hole 144. The sensor accommodating part 156 may be in close contact with the first sensor 161.

Accordingly, it is possible to prevent foreign substances or aerosol discharged from the vicinity of the opening of the pipe 130 from flowing into the first space S1. In addition, it is possible to prevent foreign substances from flowing into the second space S2 through the first sensing hole 144. In addition, failure of the board or the sensor can be prevented.

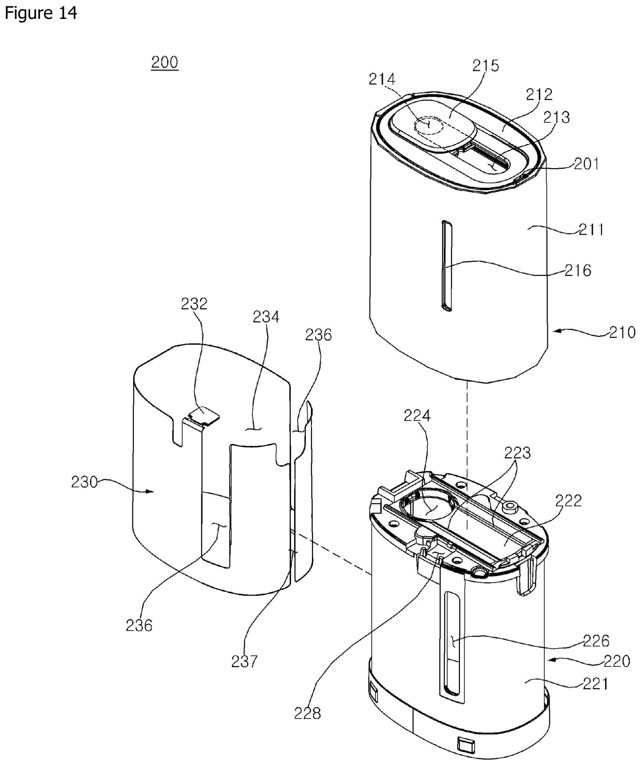

Referring to FIG. 14, the upper case 200 may include an outer case 210. The upper case 200 may include an inner case 220. The upper case 200 may include a ground board 230.

The outer case 210 may form the outer shape of the upper case 200. The outer case 210 may have a hollow shape with an open lower portion. The outer case 210 may include a lateral wall 211 forming a circumference of the hollow and an upper wall 212 covering the upper portion of the hollow.

The outer window 216 may be formed on the lateral wall 211 of the outer case 210. The outer window 216 may extend long in the vertical direction. The outer window 216 may be formed at a position corresponding to the first chamber C2 of the cartridge 300. The first outer insertion hole 214 and the slide hole 213 may be formed in the upper wall 212. The cap 215 for opening and closing the first insertion hole 214 may be installed on the upper wall 212 of the outer case 210.

The inner case 220 may be inserted into the hollow of the outer case 210 and coupled thereto. The inner case 220 may surround the hollow of the upper case 200. The inner case 220 may have a hollow shape with an open lower portion. The inner case 220 may include a lateral wall 221 forming a circumference of the hollow and an upper wall 222 covering the upper portion of the hollow.

The inner window 226 may be formed on the lateral wall 221 of the inner case 220. The inner window 226 may extend long in the vertical direction. The inner window 226 may correspond to the outer window 216. The second insertion hole 224 may be formed by opening the upper wall 222 of the inner case 220. The second insertion hole 224 may correspond to the first insertion hole 214. The rail 223 may extend from the upper wall 222 of the inner case 220 in a direction in which the slide hole 213 extends. The rail 223 supports the lower portion of the cap 215, and may guide the cap 215 to move along the slide hole 213.

The ground board 230 may extend along the circumference of the lateral wall 221 of the inner case 220 to form the circumference. The ground board 230 may surround the outside of the lateral wall 221 of the inner case 220. The ground board 230 may be disposed between the inner case 220 and the outer case 210. The ground board 230 may ground the second sensor 162 (refer to FIG. 6).

The cutout space 236 may be formed by cutting the ground board 230. The cutout space 236 may be formed at a position corresponding to the inner window 226 and the outer window 216. The size of the cutout space 236 may be larger than that of the inner window 226 and the outer window 216, and the ground board 230 may not cover the inner window 226 and the outer window 216.

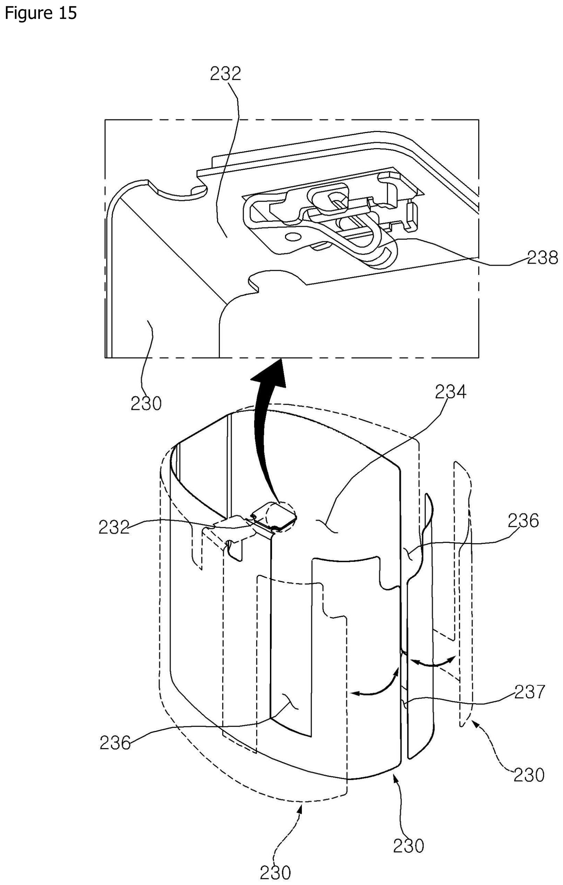

Referring to FIG. 15, the ground board 230 may be rolled to form a space 234 therein. The ground board 230 may be flexible. The ground board 230 may be a flexible printed circuit board (FPCB). The size of the gap 237 and the space 234 formed between both ends of the ground board 230 may be changed.

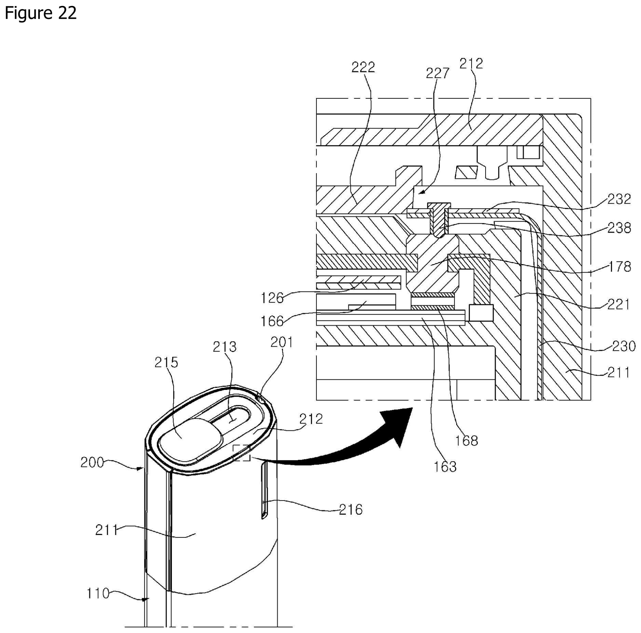

The ground board 230 may include a connecting part 232. The connecting part 232 may be formed on the upper end of the ground substrate 230. The connecting part 232 may be formed by bending from an upper end of one side of the ground board 230 toward the space 234 inwardly of the ground board 230. The connecting part 232 may be bent in an inner thickness direction of the ground substrate 230. The connecting part 232 may have conductivity. The third terminal 238 may be mounted on the connecting part 232. The third terminal 238 may face downward from the lower surface of the connecting part 232. The third terminal 238 may be a conductive terminal of a clip type or a pogo pin type (refer to FIG. 22). The third terminal 238 may be electrically connected to the ground board 230.

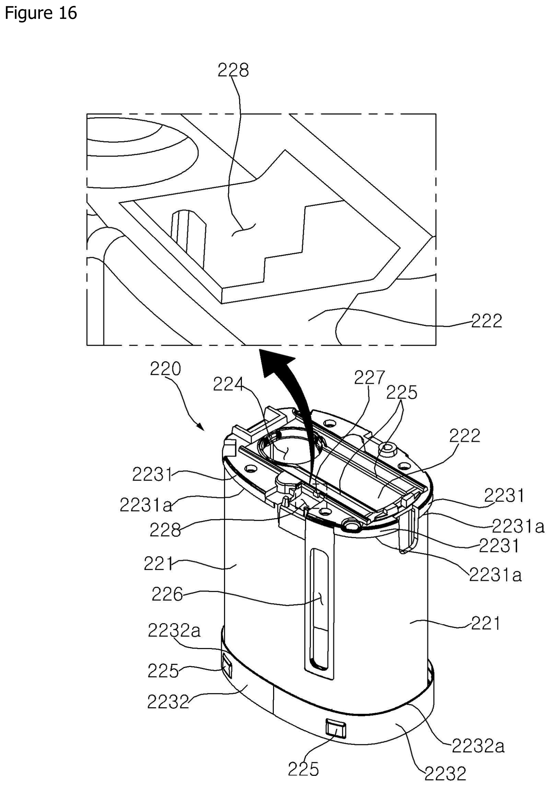

Referring to FIG. 16, the second terminal hole 228 may be formed by opening one side of the upper wall 222 of the inner case 220 up and down. The second terminal hole 228 may correspond to the third terminal 238. The second terminal hole 228 may be formed adjacent to the edge of the upper wall 222. The locking protrusion 227 may be formed to protrude from the upper wall 222 to the upper side of the second terminal hole 228.

The ribs 2231, 2232 may protrude from the lateral wall 221 of the inner case 220 in the outer thickness direction. The ribs 2231, 2232 may extend along the circumference of the lateral wall 221 to form the circumference.

The first rib 2231 may be adjacent to the upper wall 222 of the inner case 220. The first rib 2231 may be formed on the upper end of the inner case 220. The first rib 2231 may protrude from the lateral wall 221 to form a first locking protrusion 2231a downward.

The second rib 2232 may be spaced downward from the first rib 2231. The second rib 2232 may be formed at the lower end of the inner case 220. The second rib 2232 may protrude from the lateral wall 221 to form a second locking protrusion 2232a upward. The coupling protrusion 225 may protrude from the second rib 2232. A plurality of coupling protrusions 225 may be arranged along the circumferential direction of the second rib 2232.

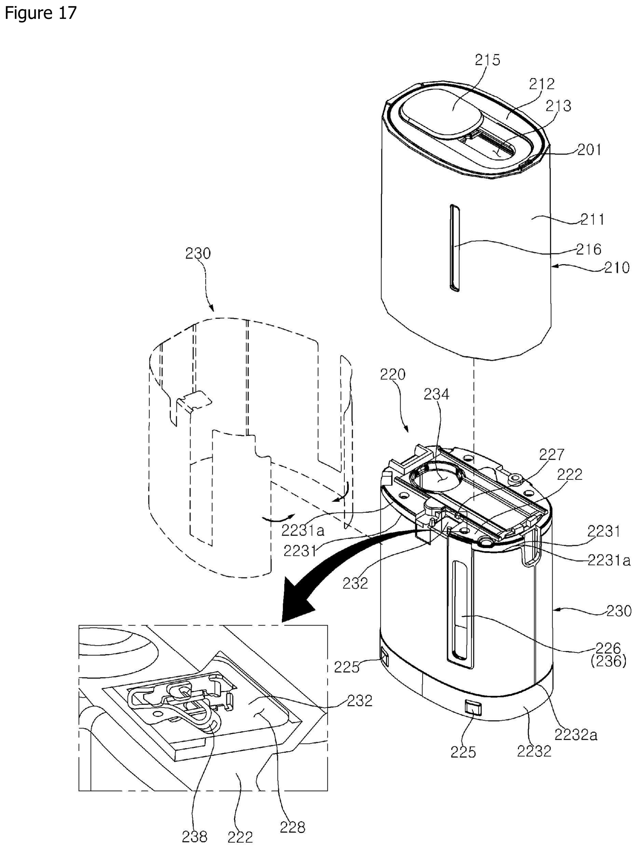

Referring to FIG. 17 to FIG. 19, the ground board 230 may be coupled to the inner case 220 to cover the lateral wall 221 of the inner case 220. The cutout space 236 may correspond to the inner window 226.

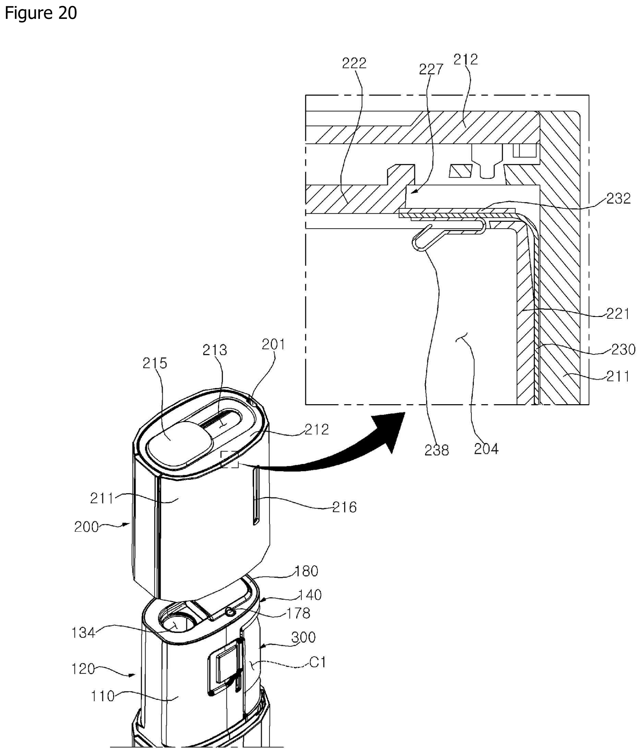

When the ground board 230 is coupled to the inner case 220, the connecting part 232 on the upper side of the third terminal 238 may be inserted into the second terminal hole 228 to cover the second terminal hole 228. The third terminal 238 may be exposed downward through the second terminal hole 228. Accordingly, the third terminal 238 may be exposed toward the hollow 204 (refer to FIG. 20) inside the inner case 220.

The locking protrusion 227 may be disposed on the upper side of the connecting part 232. The upper surface of the connecting part 232 may be caught by the locking protrusion 227. The locking protrusion 227 may limit the vertical movement of the connecting part 232. Accordingly, it is possible to prevent the connecting part 232 and the third terminal 238 from being separated upwardly from the second terminal hole 228, and to fix the positions of the connecting part 232 and the third terminal 238.

The ground board 230 may be disposed between the first rib 2231 and the second rib 2232. The upper end of the ground board 230 may be located below the first rib 2231. The upper end of the ground board 230 may be supported by the first locking protrusion 2231a of the first rib 2231. The lower end of the ground board 230 may be located above the second rib 2232. The lower end of the ground board 230 may be supported by the second locking protrusion 2232a of the second rib 2232.

The inner case 220 and the ground board 230 may be inserted into the hollow of the outer case 210. The inner case 220 and the outer case 210 may be coupled.

The coupling protrusion 225 may couple the lateral wall 221 of the inner case 220 and the lateral wall 211 of the outer case 210 in a snap-fit manner by being inserted into the groove formed on the inner side of the outer case 210. The upper wall 222 of the inner case 220 may be coupled to the upper wall 212 of the outer case 210. The first insertion hole 214 and the second insertion hole 224 may correspond to each other. The inner window 226 and the outer window 216 may correspond to each other.

The circumference of the ground board 230 may be disposed between the lateral wall 211 of the outer case 210 and the lateral wall 221 of the inner case 220. The lateral wall 211 of the outer case 210 may cover the outer circumferential surface of the ground board 230. The lateral wall 221 of the inner case 220 may cover the inner circumferential surface of the ground board 230. The ribs 2231, 2232 may contact the lateral wall 211 of the outer case 210 to block a space in which the upper and lower ends of the ground board 230 can move. The connecting part 232 may be disposed between the upper wall 222 of the inner case 220 and the lower wall 212 of the outer case 210.

Accordingly, it is possible to fix the position of the ground board 230 and prevent the ground board 230 from being separated from the inner case 220.

Referring to FIG. 20 to FIG. 22, the third terminal 238 may be exposed through the hollow 204 of the upper case 200. The third terminal 238 may face the hollow 204 from the inside of the upper case 200. The third terminal 238 may be exposed through the hollow 204 in the upper part of the upper case 200 and may face downward. The third terminal 238 may protrude from the inner case 220 into the hollow 204. The third terminal 238 may be a clip type or a pogo pin type conductive terminal.

The upper case 200 may be detachably coupled or mounted to the upper body 120. When the upper case 200 is separated from the upper body 120, the third terminal 238 may be separated from the second terminal 178 and may not be electrically connected. When the upper case 200 is mounted on the upper body 120, the upper case 200 may cover the upper body 120 to surround it. The ground board 230 may cover the upper body 120 to surround it. The ground board 230 may surround the second sensor 162 (refer to FIG. 6). When the upper case 200 is mounted on the upper body 120, the third terminal 238 may be in contact with the upper end of the second terminal 178 to be electrically connected. The third terminal 238 may be electrically connected to the first terminal 168.

Accordingly, when the upper case 200 is coupled to the upper body 120, the ground board 230 and the second sensor 162 may be connected to each other, and the second sensor 162 may be grounded through the ground board 230.

In addition, when the second sensor 162 is operated, it is possible to prevent sensing noise in the second sensor 162 generated by causing a change in permittivity in the second sensor 162 by contacting user's body, etc., with the aerosol-generating device. For example, the ground board 230 connected to the second sensor 162 may prevent noise generated in the vicinity of the second sensor 162 from the outside of the upper case 200, such that accuracy may be improved when sensing information about the stick or the remaining amount of liquid stored in the cartridge.

The windows 216, 226 may be formed at positions corresponding to the first chamber C1 and may extend in the vertical direction along the height of the first chamber C1. Through the windows 216, 226 formed in the upper case 200 of the first chamber C1, the capacity or state of the liquid stored in the first chamber C1 of the cartridge 300 may be visually checked.

Referring to FIG. 1 to FIG. 22, the aerosol-generating device according to an aspect of the present disclosure may include a body comprising an elongated insertion space; a cartridge coupled to the body to be adjacent to the insertion space; a partition wall formed at the body between the insertion space and the cartridge and configured to provide a first space therein; and a sensor installed at the body and electrically connected to a board disposed in the first space.

According to another aspect of the present disclosure, the aerosol-generating device may further comprise a cover 170, 180 covering the opening of the first space S1.

According to another aspect of the present disclosure, the aerosol-generating device may further comprise a sealing member adjacent to the insertion space and positioned between the partition wall and the cover and configured to seal the first space from the insertion space.

According to another aspect of the present disclosure, the partition wall 125 may comprise a first partition wall part and a second partition wall part defining the first space therebetween, wherein the sealing member may comprise a first sealing part providing a seal between an edge of the first partition wall part and the cover.

According to another aspect of the present disclosure, the first sealing part 151 may have a fitting groove 1515 into which edge of the first partition wall part 1251 is inserted.

According to another aspect of the present disclosure, wherein the first sealing part 151 may comprise a board guide surface 1513 adjacent to the first space S1 and formed to be declined downward toward the first space S1 to guide the board 162 to be inserted into the first space S1.

According to another aspect of the present disclosure, wherein the body may comprise an extension part extending from an upper end of the second partition wall to cover the cartridge, wherein the extension part may comprise a first sensing hole opened toward the cartridge and the extension part is covered by the cover to define a second space therein, and wherein the sensor may be disposed in the second space to be adjacent to the first sensing hole.

According to another aspect of the present disclosure, the sealing member 150 may comprise: a second sensing hole positioned to correspond to the first sensing hole; and a sensor accommodating part adjacent to the first sensing hole configured to accommodate the sensor.

According to another aspect of the present disclosure, the sealing member may comprise a second sealing part coupled to the extension part and comprising the sensor accommodating part; and a third sealing part connecting the first sealing part and the second sealing part.

According to another aspect of the present disclosure, wherein the third sealing part may be one of a pair of third sealing parts spaced apart from each other to define a board insertion hole between the first sealing part, the second sealing part, and the pair of third sealing parts, wherein the board may pass through the board insertion hole for insertion into the first space.

According to another aspect of the present disclosure, wherein the cover may be coupled to the body and presses the sealing member formed around the board insertion hole toward the partition wall and the extension part.

According to another aspect of the present disclosure, wherein the cover may be coupled to the body and presses the sealing member toward the partition wall.

According to another aspect of the present disclosure, further comprising a screw configured to fasten the cover and the body together in a direction for pressing the sealing member.

According to another aspect of the present disclosure, the aerosol-generating device may further comprise a pipe inserted into the body and configured to define the insertion space, wherein the cover may be coupled to the body and the pipe.

According to another aspect of the present disclosure, the cartridge comprises a cartridge inlet through which air is introduced, and wherein the sensor may be adjacent to the cartridge inlet to detect a flow of air into the cartridge inlet.

According to another aspect of the present disclosure, wherein the partition wall may be adjacent to the insertion space and extends parallel to a longitudinal direction of the insertion space.

Certain embodiments or other embodiments of the disclosure described above are not mutually exclusive or distinct from each other. Any or all elements of the embodiments of the disclosure described above may be combined with another or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

The present disclosure also provides for the following Examples:
1. An aerosol-generating device comprising:
   a body comprising an elongated insertion space;
   a cartridge coupled to the body to be adjacent to the insertion space;
   a partition wall formed at the body between the insertion space and the cartridge and configured to provide a first space therein; and
   a sensor installed at the body and electrically connected to a board disposed in the first space.
2. The aerosol-generating device according to example 1, further comprising a cover covering an opening of the first space.
3. The aerosol-generating device according to example 2, further comprising a sealing member adjacent to the insertion space and positioned between the partition wall and the cover and configured to seal the first space from the insertion space.
4. The aerosol-generating device according to example 3, wherein the partition wall comprises:
   a first partition wall part and a second partition wall part defining the first space therebetween,
   wherein the sealing member comprises a first sealing part providing a seal between an edge of the first partition wall part and the cover.
5. The aerosol-generating device according to example 4, wherein the first sealing part comprises a fitting groove into which the edge of the first partition wall part is inserted.
6. The aerosol-generating device according to example 4, wherein the first sealing part comprises a board guide surface adjacent to the first space and formed to be declined downward toward the first space to guide the board to be inserted into the first space.
7. The aerosol-generating device according to example 4,
   wherein the body comprises an extension part extending from an upper end of the second partition wall to cover the cartridge,
   wherein the extension part comprises a first sensing hole opened toward the cartridge and the extension part is covered by the cover to define a second space therein, and
   wherein the sensor is disposed in the second space to be adjacent to the first sensing hole.
8. The aerosol-generating device according to example 4, wherein the sealing member further comprises:
   a second sensing hole positioned to correspond to the first sensing hole; and
   a sensor accommodating part adjacent to the first sensing hole configured to accommodate the sensor.
9. The aerosol-generating device according to example 4, wherein the sealing member further comprises:
   a second sealing part coupled to the extension part and comprising the sensor accommodating part; and
   a third sealing part connecting the first sealing part and the second sealing part.
10. The aerosol-generating device according to example 9, wherein the third sealing part is one of a pair of third sealing parts spaced apart from each other to define a board insertion hole between the first sealing part, the second sealing part, and the pair of third sealing parts, wherein the board passes through the board insertion hole for insertion into the first space.
11. The aerosol-generating device according to example 10, wherein the cover is coupled to the body and presses the sealing member formed around the board insertion hole toward the partition wall and the extension part.
12. The aerosol-generating device according to example 3, wherein the cover is coupled to the body and presses the sealing member toward the partition wall.
13. The aerosol-generating device according to example 11 or 12, further comprising a screw configured to fasten the cover and the body together in a direction for pressing the sealing member.
14. The aerosol-generating device according to example 2, further comprising a pipe inserted into the body and configured to define the insertion space,
   wherein the cover is coupled to the body and the pipe.
15. The aerosol-generating device according to example 1, wherein the cartridge comprises a cartridge inlet through which air is introduced, and
   wherein the sensor is adjacent to the cartridge inlet to detect a flow of air into the cartridge inlet.
16. The aerosol-generating device according to example 1, wherein the partition wall is adjacent to the insertion space and extends parallel to a longitudinal direction of the insertion space.

## Claims

1. An aerosol-generating device comprising:
a body comprising an insertion space;
a sensor installed at the body and configured to detect an electro-magnetic characteristic of surroundings;
an upper case detachably coupled to the body and comprising an insertion hole corresponding to an opening of the insertion space; and
a ground board coupled to the upper case and extending along a circumference of the upper case and configured to electrically ground the sensor.

2. The aerosol-generating device according to claim 1, further comprising:
a second terminal connected to the sensor and exposed from the body; and
a third terminal connected to the ground board and installed at the upper case to be exposed to an inside of the upper case to contact the second terminal when the upper case is coupled to the body.

3. The aerosol-generating device according to claim 2, wherein the second terminal is exposed upward from an upper portion of the body, and
wherein the third terminal is exposed downward from an upper wall of the upper case.

4. The aerosol-generating device according to claim 2 or 3, wherein the third terminal is separated from the second terminal when the upper case is separated from the body.

5. The aerosol-generating device according to one of claims 2 to 4, wherein the third terminal is a clip pin or a pogo pin.

6. The aerosol-generating device according to one of claims 1 to 5, wherein the upper case comprises:
an upper wall covering an upper end of the body; and
lateral walls covering lateral surfaces of a circumference of the body; wherein the ground board is installed at the lateral walls to extend along a circumference of the lateral walls.

7. The aerosol-generating device according to claim 6, wherein the upper case comprises:
an inner case; and
an outer case coupled to surround an outside of the inner case,
wherein the ground board is disposed between the inner case and the outer case.

8. The aerosol-generating device according to claim 7, wherein the inner case comprises:
a first rib supporting an upper end of the ground board; and
a second rib supporting a lower end of the ground board.

9. The aerosol-generating device according to claim 7 or 8, further comprising:
a second terminal connected to the sensor and exposed from the body;
a terminal hole formed at an upper wall of the inner case;
a connecting part of an upper end the ground board bent inwardly to be disposed in the terminal hole; and
a third terminal mounted on the connecting part and exposed to an interior of the inner case to contact the second terminal.

10. The aerosol-generating device according to claim 9, further comprising:
a locking protrusion protruding from the inner case at the terminal hole and configured to contact the connecting part to restrict vertical movement of the connecting part when the third terminal contacts the second terminal.

11. The aerosol-generating device according to one of claims 1 to 10, wherein the ground board is a flexible printed circuit board, FPCB.

12. The aerosol-generating device according to one of claims 1 to 11, wherein the upper case comprises a cap configured to cover or expose the insertion hole.

13. The aerosol-generating device according to one of claims 1 to 12, wherein the sensor is disposed adjacent to the insertion space.

14. The aerosol-generating device according to claim 13, further comprising:
a cartridge configured to store a liquid and coupled to the body to be adjacent to the insertion space,
wherein the sensor is disposed between the insertion space and the cartridge.
